# EUROPÄISCHE PATENTSCHRIFT

(11) **EP 1 338 144 B1**
(45) Veröffentlichungstag und Bekanntmachung des Hinweises auf die Patenterteilung: **27.09.2006**
(21) Anmeldenummer: 01967321.9
(22) Anmeldetag: 08.09.2001
(51) Int. Cl.: H04N 7/173

(54) **HOTEL-FERNSEHSYSTEM**
HOTEL TELEVISION SYSTEM
SYSTEME DE TELEVISION EN HOTEL

(30) Priorität: 15.09.2000 DE 10045653
(43) Veröffentlichungstag der Anmeldung: 27.08.2003
(73) Patentinhaber: Grundig Multimedia B.V., 1083HJ Amsterdam (NL)
(72) Erfinder: MIRSBERGER, Werner, 91080 Uttenreuth (DE); ROTH, Hubert, 90765 Fürth (DE)
(74) Vertreter: Pröll, Jürgen
(86) Internationale Anmeldenummer: PCT/EP2001/010380
(87) Internationale Veröffentlichungsnummer: WO 2002/023906

(56) Entgegenhaltungen:
- WO-A-00/49805
- US-A- 5 625 864
- PATENT ABSTRACTS OF JAPAN vol. 010, no. 050 (E-384), 27. Februar 1986 (1986-02-27) & JP 60 204137 A (HOOCHIKI KK), 15. Oktober 1985 (1985-10-15)
- "Der Hotelfernseher - ein Multimediagerät ?" [ONLINE], März 2000 (2000-03), Seiten 1-2, XP002181410 Gefunden im Internet: <URL:www.hotelundtechnik.de/titel/archiv/0 200/0200_hoteltv/0200_hoteltv_01.html> [gefunden am 2001-10-24]
- PATENT ABSTRACTS OF JAPAN vol. 2000, no. 02, 29. Februar 2000 (2000-02-29) & JP 11 331800 A (NEC ENG LTD), 30. November 1999 (1999-11-30)
- "Pressemitteilung: seit 1993 rund 80.000 Hotelzimmer mit Philips TV-Geräten und Prodac Systemanbindung ausgestattet - europaweit" [ONLINE], August 2000 (2000-08), Seiten 1-2, XP002181405 Gefunden im Internet: <URL:www.prodac.com/webpc/german/pressemit teilungen_b.html> [gefunden am 2001-10-24]
- PATENT ABSTRACTS OF JAPAN vol. 013, no. 592 (C-671), 26. Dezember 1989 (1989-12-26) & JP 01 249017 A (TOSHIBA CORP), 4. Oktober 1989 (1989-10-04)

## Beschreibung

Die Erfindung betrifft ein Hotel-Fernsehsystem, welches einen Zentralcomputer und eine Vielzahl von mit diesem verbundene Hotel-Fernsehgeräte aufweist.

Ein derartiges Hotel-Fernsehsystem ist beispielsweise das von der Anmelderin vertriebene ASIS-System. Beim ASIS-System und auch bei dem in der EP 0 470 124 B1 beschriebenen System sind eine Vielzahl identifizierbarer Anwendergeräte vorgesehen, von denen jedes eine eigene Steuereinrichtung aufweist. Die Anwendergeräte sind über wählbare Videokanäle angeschlossen, so dass sie Standard-Hochfrequenzsignale empfangen, welche Teletextinformationen beinhalten können. Weiterhin können mittels der Anwendergeräte wahlweise weitere Audio- und/oder Videoinformationen dargestellt werden. Die Anwendergeräte sind individuell oder gruppenweise mit Hilfe von digitalen Signalen, die unabhängig von den Standard-Hochfrequenzsignalen und dem gewählten Videokanal erzeugt und übertragen werden, steuerbar. Eine Datenübertragung kann bidirektional erfolgen. Die Anordnung weist einen Zentralrechner und eine Steuereinheit auf, die zumindest zur Weiterleitung der digitalen Signale und hierdurch zur Steuerung eines ausgewählten Anwendergerätes und einer diesem zugeordneten Moduleinrichtung vorgesehen ist.

Die Moduleinrichtung ist zwischen einem Eingang des Anwendergerätes und den Farbvideokreisen des Anwendergerätes angeordnet und an die Steuereinrichtung desselben angeschossen, um eine Steuerung in Reaktion auf die digitalen Signale zu bewirken. Die Moduleinrichtung dient dazu, die Digitalsignale zu empfangen und zu dekodieren. Sie weist einen Text- und Graphikprozessor auf, der mit einer Einheit zusammenarbeitet, die eine Video-Schnittstelle zur Umwandlung der Digitalsignale in lokal erzeugte analoge Videosignale aufweist. Diese werden dem Anwender als die weiteren Audio- und/oder Videoinformationen angeboten, wobei letztere in Form von Text- oder Hochauflösungsbildern und -graphiken auf dem Bildschirm des Anwendergeräts unabhängig von aus Fernsehrundfunksignalen abgeleiteten Videobildern dargestellt werden.

Aus US-A-5 625 864 ist ein Videoverteilersystem bekannt, welches eine Datenkarte in einem Gerät der Unterhaltungselektronik aufweist, über weiche nutzerspezifische Daten dem Videoverteilersystem zuführbar sind.

Aus WO 00 49805 ist ein Verfahren und ein System zum Verteilen von Videozusatzinformationen zu Werbezwecken bekannt. Es wird die Verwendung einer Speicherkarte beschrieben, welche zur Verteilung der Daten dient.

Ausgehend von diesem Stand der Technik liegt der Erfindung die Aufgabe zugrunde, einen Weg aufzuzeigen, wie die Nutzungsmöglichkeiten des bekannten Hotel-Fernsehsystems erweitert werden können.

Diese Aufgabe wird durch ein Hotel-Fernsehsystem mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass im Hotel-Fernsehsystem hotelgastspezifische Informationen in gewünschter Weise verarbeitet werden.

So kann beispielsweise das Handy eines Hotelgastes an ein in einem Hotelzimmer aufgestelltes Hotel-Fernsehgerät angeschlossen und der Bildschirm dieses Fernsehgerätes zur Darstellung mittels des Handys empfangenen SMS- oder UMTS-Nachrichten und von mittels des Handys zu versendenden SMS- oder UMTS-Nachrichten verwendet werden. Die zu versendenden Nachrichten werden dabei vorzugsweise mittels einer dem Hotelgast zur Verfügung gestellten und an das Hotel-Fernsehgerät angeschlossenen Tastatur erstellt.

Weiterhin können auf einer Speicherkarte hotelgastspezifische Daten abgespeichert sein. Diese Daten, zu denen beispielsweise während der letzten Hotelaufenthalte des Gastes automatisch erfasste, den Sehgewohnheiten des Gastes entsprechende Fernsehkanaldaten gehören können, werden beim Einchecken des Gastes durch den Zentralcomputer erfasst. Dieser programmiert dann das im Hotelzimmer des Gastes befindliche Hotel-Fernsehgerät derart, dass die vom Hotelgast am häufigsten gesehenen Fernsehkanäle den niedrigsten Stationstastennummern zugeordnet werden. Weiterhin können auf der Speicherkarte auch Sonderwünschen des Gastes entsprechende Daten abgespeichert sein, beispielsweise eine bestimmte Zusatzmöblierung des Hotelzimmers, bestimmte Getränkewünsche, Zeitschriftenwünsche, usw.

Ferner können auf einem Laptop des Gastes gastspezifische Informationen abgespeichert sein, beispielsweise Internetzugangsdaten. Diese werden nach dem Anschluss des Laptops an das Hotel-Fernsehgerät vom Hotel-Fernsehsystem erfasst und zum Aufbau einer Internetverbindung verwendet. Der nachfolgende Internet-Dialog kann unter Verwendung des Bildschirm des Hotel-Fernsehgerätes erfolgen.

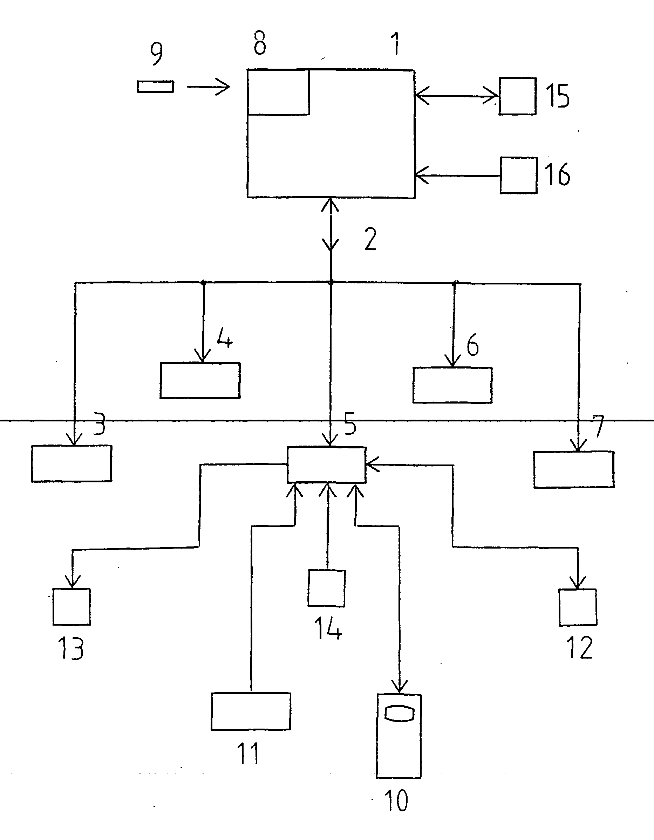

Weitere vorteilhafte Eigenschaften der Erfindung ergeben sich aus der Erläuterung eines Ausführungsbeispiels anhand der Figur. Diese zeigt ein Blockschaltbild, in welchem die zum Verständnis der Erfindung wesentlichen Bestandteile eines Hotel-Fernsehsystems dargestellt sind.

Das gezeigte Hotel-Fernsehsystem weist einen Zentralcomputer 1 auf. Dieser ist über ein Leitungssystem 2 mit einer Vielzahl von Hotel-Fernsehgeräten 3, 4, 5, 6, 7 verbunden, von denen jedes in einem Zimmer des Hotels aufgestellt ist.

Der Zentralcomputer 1 ist mit einem Karten-Lesegerät 8 versehen, welches zum Lesen von auf einer Karte 9 abgespeicherten Informationen dient. Weiterhin ist der Zentralcomputer 1 an eine ISDN-Übertragungsleitung 15 angeschlossen. Ferner steht der Zentralcomputer 1 mit verschiedenen Signalquellen 16 in Verbindung. Bei den Signalquellen16 kann es sich beispielsweise um einen Server, um Magnetbandgeräte, CD-Wechsler, Rundfunksignalempfänger und/oder andere analoge oder digitale Signalquellen handeln.

Jedes der in den Hotelzimmern aufgestellten Fernsehgeräte 3, 4, 5, 6, 7 weist Schnittstellen auf, über welche es mit externen Geräten verbunden ist. Dies ist in der Figur lediglich für das Fernsehgerät 5 gezeigt. An dieses sind ein Handy 10, eine Tastatur 11, ein Laptop 12, ein oder mehrere fernsehunabhängige elektrische Einheiten oder Geräte 13 und ein Fernbedienungsgeber 14 angeschlossen.

Der Anschluss des Handys 10 an den Fernsehempfänger 5, welcher beispielsweise unter Verwendung eines Verbindungskabels erfolgen kann, dient dazu, den Bildschirm des Fernsehempfängers 5 zur Anzeige von alphanumerischen Nachrichten zu verwenden. Bei diesen alphanumerischen Nachrichten kann es sich um SMS- oder UMTS-Nachrichten handeln, die vom Handy 10 empfangen werden oder mittels des Handys 10 ausgestrahlt werden sollen. Eine Eingabe der über das Handy auszustrahlenden alphanumerischen Nachrichten kann dabei unter Verwendung der Tastatur 11 erfolgen, die dem Gast im Hotelzimmer zur Verfügung gestellt wird. Die eingegebenen Nachrichten werden am Bildschirm des Fernsehgerätes dargestellt und nach Eingabe eines Sendebefehls, der unter Verwendung einer Bedientaste des Fernbedienungsgebers 14 eingegeben wird, an das Handy übertragen und von diesem ausgestrahlt.

Das Speicherkarten-Lesegerät 8 ist dazu vorgesehen, auf der Speicherkarte 9 abgespeicherte, hotelgastspezifische Informationen zu lesen, so dass diese in das Hotel-Fernsehsystem übernommen werden können. Bei den auf der Speicherkarte abgespeicherten Informationen handelt es sich beispielsweise um Informationen über die Bezeichnungen und/oder Kanaldaten von Wunschfernsehsendern des Hotelgastes. Diese Daten werden vom Zentralcomputer stets dann automatisch erfasst, wenn sich ein Gast in das Hotel eingecheckt hat und während seines Aufenthaltes die von ihm gewünschten Fernsehsender anwählt. Die Anzahl der Anwahlen der jeweiligen Fernsehsender und auch die Dauer, während der das Fernsehgerät auf diesem Kanal betrieben wird, werden automatisch erfasst und auf der Speicherkarte abgespeichert. Erfolgt dann zu einem späteren Zeitpunkt ein erneutes Einchecken des Gastes unter Verwendung der Speicherkarte, dann werden diese Daten von der Karte gelesen und dazu verwendet, das im Hotelzimmer des Gastes vorhandene Hotel-Fernsehgerät derart zu programmieren, dass die vom Gast bevorzugten Sender bzw. deren Kanaldaten über die niedrigzahligen Stationstastennummern anwählbar sind.

Weiterhin können auf der Speicherkarte auch Daten abgespeichert sein, die Sonderwünschen des Hotelgastes entsprechen. Beispielsweise kann es sich dabei um eine gewünschte Sonder-Möblierung des Hotelzimmer handeln, um bestimmte Getränke, die der Gast auf seinem Zimmer vorfinden möchte, um bestimmte Zeitschriften, die der Gast auf seinem Zimmer vorfinden möchte, usw.. Alle diese Daten werden bei einem neuen Einchecken des Gastes von der Karte gelesen, so dass das Hotelpersonal den Sonderwünschen des Kunden gerecht werden kann.

Schließt ein Hotelgast seinen mitgebrachten Laptop 12 an das Hotel-Fernsehgerät 5 an, dann kann der Gast unter Zwischenschaltung des Hotel-Fernsehsystems im Internet surfen. Zu diesem Zweck gibt der Gast unter Verwendung seines Laptops die erforderlichen Daten zum Einwählen und im Rahmen des späteren Internetdialoges ein. Diese Daten werden über das Fernsehgerät 5 an den Zentralcomputer 1 weitergeleitet und von diesem zum Aufbau einer Internet-Verbindung über die ISDN-Leitung 15 verwendet. Mittels des Zentralcomputers 1 wird die Zeit, die der Gast im Internet verbringt und eventuell fällige Zusatzgebühren erfasst und der Hotelrechnung des Gastes hinzuaddiert. Dabei besteht die Möglichkeit, die Internet-Verbindung über einen vom Gast gewünschten Internet-Anbieter oder einen anderen Internet-Anbieter zu wählen, mit welchem das Hotel entsprechende Vereinbarungen hat.

Mittels des Fernbedienungsgebers 14 hat der Hotelgast auch die Möglichkeit, an das Hotel-Fernsehgerät 5 angeschlossene fernsehunabhängige elektrische Einheiten zu steuern. Bei diesen Einheiten kann es sich beispielsweise um ein Rollo, eine Jalousie, einen Vorhang, einen Temperaturregler oder eine Klimaanlage handeln. Vorzugsweise wird zu diesem Zweck nach Betätigung einer Aktivierungstaste des Fernbedienungsgebers auf dem Bildschirm des Fernsehers 5 eine Menuedarstellung angezeigt, in welcher der Benutzer die anzusteuernden Einheiten beziehungsweise Geräte auswählt und auch die jeweils gewünschten Steuerbefehle eingibt.

Bei einer der Signalquellen 16 handelt es sich um eine Pay-TV-Quelle, welche kostenpflichtige Sendungen anbietet. Möchte ein Hotelgast eine derartige Pay-TV-Sendung sehen, dann aktiviert er mittels des Fernbedienungsgebers 14 die Darstellung eines Eingangsmenues auf dem Bildschirm des Fernsehgerätes 5. In diesem Menue wird dem Benutzer unter anderem die Frage gestellt, ob er die Gebühren für die gewünschte Pay-TV-Sendung zusammen mit der Hotelrechnung entrichten möchte oder via Kreditkarte bezahlen möchte. Entscheidet sich der Gast für die letztgenannte Möglichkeit, dann kann er auf der dargestellten Menueseite oder auf einer Folgeseite die Nummer seiner Kreditkarte und bei Bedarf weitere Legitimationsdaten eingeben. Diese Daten werden vom Zentralcomputer 1 erfasst und auf ihre Zulässigkeit hin überprüft. Sind die eingegebenen Daten zulässig, dann wird die gewünschte Pay-TV-Sendung freigegeben.

Bei den in der Figur dargestellten Hotel-Fernsehgeräten kann es sich um Fernsehgeräte handeln, in deren Gehäuse das zum Empfang und zur Aussendung von digitalen Signalen, wie sie im Hotel-Fernsehsystem über das Leitungsnetz 2 übertragen werden, notwendige Modul integriert ist. Das genannte Modul kann aber auch außerhalb des jeweiligen Fernsehgerätes als externes Gerät realisiert sein. Dabei besteht die Möglichkeit, dieses externe Gerät als flaches Gerät auszubilden, welches unterhalb des Fernsehgerätes aufgestellt wird und dessen Untersatz bildet. Die erforderlichen Datenverbindungen zwischen dem Fernsehgerät und dem Zusatzgerät erfolgen auf der Rückseite der Geräte über Kabelverbindungen. In vorteilhafter Weise kann dieses externe Gerät auch integrierter Bestandteil eines Fußes sein, auf welchen das Fernsehgerät aufgesetzt ist. Die Verwendung eines externen Gerätes hat den Vorteil, dass es an jedes handelübliche Fernsehgerät angeschlossen werden kann.

Bei einer weiteren der Signalquellen 16 kann es sich um einen Server handeln, welcher digitale Daten zu Verfügung stellt. Beispielsweise besteht die Möglichkeit, von diesem Server aus digitale Daten via Satellit oder Richtfunk in das jeweilige Hotel zu übertragen und dort über den Zentralcomputer den einzelnen Fernsehgeräten zur Verfügung zu stellen.

Weiterhin kann dem Zentralcomputer ein in der Figur nicht dargestellter Drucker beigestellt werden, welcher den einzelnen Hotelgästen zur Verfügung steht. Die Hotelgäste können beispielsweise Nachrichten, die sie selbst erstellt haben oder über eine der Signalquellen empfangen haben oder die ihnen als SMS- oder UMTS-Nachricht zugegangen sind, von diesem Drucker ausdrucken lassen. Diese Ausdrucke werden dann dem Gast vom Hotelpersonal zur Verfügung gestellt.

## Patentansprüche

1. Hotel-Fernsehsystem, welches einen Zentralcomputer (1) und eine Vielzahl von mit diesem verbundene Hotel-Fernsehgeräte (3,4,5,6,7) aufweist, wobei die Hotel-Fernsehgeräte (3,4,5,6,7) jeweils mindestens eine Schnittstelle aufweisen, über welche hotelgastspezifische Informationen zuführbar sind, die hotelgastspezifischen Informationen auf einer Speicherkarte abgespeichert und diese hotelgastspezifischen Informationen einem Zentralcomputer (1) des Hotel-Fernsehsystems zuführbar sind, und zum Lesen der auf der Speicherkarte (9) abgespeicherten Informationen ein dem Zentralcomputer (1) zugeordnetes oder in diesen integriertes Speicherkarten-Lesegerät (8) vorgesehen ist und die vom Speicherkarten-Lesegerät (8) gelesenen Informationen vom Zentralcomputer einem vorgegebenen Hotel-Fernsehgerät zuführbar sind
**dadurch gekennzeichnet, dass**
die auf der Speicherkarte gespeicherten Informationen hotelgast-spezifischen Wunschsendern zugehörige Daten sind und die dem hotelgast-spezifischen Wunschsendem zugehörigen Daten vom Zentralcomputer (1) automatisch erfasste Daten sind, die während des Aufenthalts eines Gastes im Hotel durch Auswertung der Sehgewohnheiten des Gastes ermittelt und auf der Speicherkarte gespeichert werden und die auf der Speicherkarte abgespeicherten Informationen Sonderwünschen des Hotelgastes zugehörige Daten sind und die hotelgastspezifischen Informationen zudem Steuerbefehle für eine fernsehunabhängige elektrische Einheit oder ein fernsehunabhängiges Gerät (13) des Hotelzimmers enthalten.

2. Hotel-Fernsehsystem, nach Anspruch 1,
**dadurch gekennzeichnet, dass**
die hotelgastspezifischen Informationen abgeleitete Daten sind der die hotelgastspezifischen Informationen vom Handy des Hotelgastes empfangene Nachrichten sind oder die empfangenen Nachrichten SMS-Nachrichten oder UMTS-Nachrichten sind.

3. Hotel-Fernsehsystem nach einem oder mehreren der vorhergehenden Ansprüche,
**dadurch gekennzeichnet, dass**
die hotelgastspezifischen Informationen von einem Laptop (12) des Hotelgastes abgeleitete Informationen sind.

4. Hotel-Fernsehsystem nach einem oder mehreren der vorhergehenden Ansprüche,
**dadurch gekennzeichnet, dass**
die hotelgastspezifischen Informationen mittels einer Tastatur (11) erstellte Nachrichten sind, die auf dem Bildschirm des Hotel-Fernsehgerätes dargestellt werden und auszusendenden SMS- oder UMTS-Nachrichten entsprechen.

5. Hotel-Fernsehsystem nach einem oder mehreren der vorhergehenden Ansprüche,
**dadurch gekennzeichnet, dass**
die hotelgastspezifischen Informationen Internetzugangsdaten entsprechende Informationen sind und/oder die Intemetzugangsdaten vom Hotel-Fernsehgerät zum Zentralcomputer übertragen werden und von diesem zum Aufbau einer Internetverbindung genutzt worden und/oder die Internetnutzungsgebühren vom Zentralcomputer erfasst und dem Hotelgast in Rechnung gestellt werden.

6. Hotel-Fernsehsystem nach Anspruch 5,
**dadurch gekennzeichnet, dass**
die elektrische Einheit eine Jalousiesteuerung, eine Rollosteuerung, eine Temperatursteuerung oder eine Klimaanlagensteuerung ist und/oder die Steuerbefehle mittels der Fernbedienung (14) des Hotel-Fernsehgerätes eingebbar sind.

7. Hotel-Fernsehsystem nach einem oder mehreren der vorhergehenden Ansprüche,
**dadurch gekennzeichnet, dass**
die hotelgastspezifischen Informationen die Kreditkartennummer des Hotelgastes enthalten.

8. Hotel-Fernsehsystem nach einem oder mehreren der vorhergehenden Ansprüche,
**dadurch gekennzeichnet, dass**
ein Nutzer über das Hotel-Fernsehsystem eine Hotel-Rechnung bargeldlos begleichen kann.

## Claims

1. Hotel television system, which has a central computer (1) and a multiplicity of hotel television sets (3,4,5,6,7) connected thereto, the hotel television sets (3,4,5,6,7) each having at least one interface via which hotel-guest-specific information can be supplied and which stores hotel-guest-specific information on a memory card and said hotel-guest-specific information can be supplied to a central computer (1) of the hotel television system, and a memory-card read device (8) associated with the central computer (1) or integrated into same is provided for the purpose of reading the information stored on the memory card (9), and the information read by the memory-card read device (8) can be supplied by the central computer to a predefined hotel television set,
**characterized in that**
the information stored on the memory card is data associated with hotel-guest-specific request transmitters, and the data associated with the hotel-guest-specific request transmitter are data which are automatically recorded by the central computer (1), are ascertained during a guest's stay in the hotel through analysis of the guest's viewing practices and are stored on the memory card, and the information stored on the memory card is data associated with the special requests of the hotel guest, and the hotel-guest-specific information additionally includes control commands for an electrical unit or a device (13) of the hotel room, said unit or device being independent of television.

2. Hotel television system according to claim 1,
**characterized in that**
the hotel-guest-specific information is derived data, the hotel-guest-specific information is messages received from the mobile telephone of the hotel guest, or the received messages are SMS messages or UMTS messages.

3. Hotel television system according to one or more of the preceding claims,
**characterized in that**
the hotel-guest-specific information is information derived from a laptop (12) of the hotel guest.

4. Hotel television system according to one or more of the preceding claims,
**characterized in that**
the hotel-guest-specific information is messages generated by means of a keyboard (11) which are displayed on the display screen of the hotel television set and correspond to SMS or UMTS messages to be transmitted.

5. Hotel television system according to one or more of the preceding claims,
**characterized in that**
the hotel-guest-specific information is information corresponding to Internet access data and/or the Internet access data are transmitted from the hotel television set to the central computer and are used by the latter to establish an Internet connection and/or the Internet usage fees are recorded by the central computer and billed to the hotel guest.

6. Hotel television system according to claim 5,
**characterized in that**
the electrical unit is a venetian-blind controller, a roller-blind controller, a temperature controller or an air-conditioning controller and/or the control commands can be input by means of a remote-control device (14) of the hotel television set.

7. Hotel television system according to one or more of the preceding claims,
**characterized in that**
the hotel-guest-specific information includes the credit card number of the hotel guest.

8. Hotel television system according to one or more of the preceding claims,
**characterized in that**
a user can cashlessly pay a hotel bill via the hotel television system.

## Revendications

1. Système de télévision en hôtel qui comprend un ordinateur central (1) et une pluralité de téléviseurs de l'hôtel (3, 4, 5, 6, 7) qui sont reliés avec celui-ci, les téléviseurs de l'hôtel (3, 4, 5, 6, 7) étant munis respectivement d'au moins une interface par l'intermédiaire de laquelle peuvent être amenées des informations spécifiques aux clients de l'hôtel, les informations spécifiques aux clients de l'hôtel étant mémorisées sur une carte de mémoire, alors que ces informations spécifiques aux clients de l'hôtel peuvent être amenées à un ordinateur central (1) du système de télévision en hôtel, et une unité de lecture des cartes de mémoire (8), laquelle est attribuée à l'ordinateur central (1) ou est intégrée dans celui-ci, étant prévue pour la lecture des informations mémorisées sur la carte de mémoire (9), alors que les informations lues par l'unité de lecture des cartes de mémoire (8) peuvent être transmises par l'ordinateur central à un téléviseur prédéterminé de l'hôtel, **caractérisé en ce que** les informations mémorisées sur la carte de mémoire sont des données spécifiques aux clients de l'hôtel et se rapportant à des émetteurs souhaités par ceux-ci, alors que les données spécifiques aux clients de l'hôtel et se rapportant à des émetteurs souhaités par ceux-ci sont des données saisies automatiquement par l'ordinateur central (1), lesquelles sont déterminées lors du séjour de clients dans l'hôtel par l'exploitation des habitudes télévisuelles de ces clients et sont mémorisées sur la carte de mémoire, alors que les informations mémorisées sur la carte de mémoire sont des données se rapportant à des souhaits particuliers des clients de l'hôtel et alors que les informations spécifiques aux clients de l'hôtel contiennent en outre des ordres de commande pour une unité électrique indépendante du téléviseur ou pour un appareil (13) de la chambre d'hôtel qui est indépendant du téléviseur.

2. Système de télévision en hôtel selon la revendication 1, **caractérisé en ce que** les informations spécifiques aux clients de l'hôtel sont des informations récupérées, que les informations spécifiques aux clients de l'hôtel sont des messages reçus par le téléphone mobile de clients de l'hôtel ou que les messages reçus sont des messages SMS ou des messages UMTS.

3. Système de télévision en hôtel selon l'une quelconque ou plusieurs des revendications précédentes, **caractérisé en ce que** les informations spécifiques aux clients de l'hôtel sont des informations émanant d'ordinateurs portables (12) de clients de l'hôtel.

4. Système de télévision en hôtel selon l'une quelconque ou plusieurs des revendications précédentes, **caractérisé en ce que** les informations spécifiques aux clients de l'hôtel sont des messages qui sont établis à l'aide d'un clavier (11), qui sont représentés sur l'écran du téléviseur de l'hôtel et qui correspondent à des messages SMS ou à des messages UMTS à émettre.

5. Système de télévision en hôtel selon l'une quelconque ou plusieurs des revendications précédentes, **caractérisé en ce que** les informations spécifiques aux clients de l'hôtel sont des informations correspondant à données d'accès à l'Internet et/ou **en ce que** les données d'accès à l'Internet sont transmises par le téléviseur de l'hôtel à l'ordinateur central et sont utilisées par celui-ci pour établir une liaison avec l'Internet et/ou **en ce que** les taxes d'utilisation de l'Internet sont saisies par l'ordinateur central et sont facturées au client de l'hôtel qui est concerné.

6. Système de télévision en hôtel selon la revendication 5, **caractérisé en ce que** l'unité électrique est une commande de store, une commande de rideau, une commande de température ou une commande de climatisation et/ou **en ce que** les ordres de commande peuvent être saisis au moyen de la télécommande (14) du téléviseur de l'hôtel.

7. Système de télévision en hôtel selon l'une quelconque ou plusieurs des revendications précédentes, **caractérisé en ce que** les informations spécifiques aux clients de l'hôtel contiennent le numéro de carte de crédit du client de l'hôtel qui est concerné.

8. Système de télévision en hôtel selon l'une quelconque ou plusieurs des revendications précédentes, **caractérisé en ce que** le système de télévision en hôtel permet à un utilisateur de régler une note d'hôtel sans utilisation d'argent liquide.
